# EUROPÄISCHE PATENTSCHRIFT

(11) **EP 1 061 720 B1**
(45) Veröffentlichungstag und Bekanntmachung des Hinweises auf die Patenterteilung: **15.11.2006**
(21) Anmeldenummer: 00440176.6
(22) Anmeldetag: 16.06.2000
(51) Int. Cl.: H04M 3/22, H04Q 3/00

(54) **System und Verfahren zum Abhöhren von Kommunikationsverbindungen mittels eines einzelnen zentralen Abhöhrverwalters**
System and method to intercept communications with the use of a single central monitoring manager.
Méthode et dispositif de surveillance de communications en utilisant un système unique de surveillance central

(30) Priorität: 18.06.1999 DE 9928017 U
(43) Veröffentlichungstag der Anmeldung: 20.12.2000
(73) Patentinhaber: ALCATEL, 75008 Paris (FR)
(72) Erfinder: Hintzen, Heinrich, 70439 Stuttgart (DE); Lautenschlager, Wolfgang, 71287 Weissach-Flacht (DE)
(74) Vertreter: Rausch, Gabriele

(56) Entgegenhaltungen:
- EP-A- 0 792 074
- WO-A-98/48574
- US-A- 5 586 177
- US-A- 5 590 171
- US-A- 5 881 132
- US-A- 5 913 161

## Beschreibung

Die Erfindung betrifft ein Verfahren zum Abhören von Kommunikationsverbindungen zwischen zwei oder mehr Teilnehmern eines Kommunikationsnetzes nach dem Oberbegriff von Anspruch 1, einen Abhörverwalter zur Unterstützung des Abhörens von Kommunikationsverbindungen zwischen zwei oder mehr Teilnehmern eines Kommunikationsnetzes nach dem Oberbegriff von Anspruch 8, und eine Dienststeuerplattform nach dem Oberbegriff von Anspruch 10.

Nationale und internationale Gesetze fordern von Betreibern eines Kommunikationsnetzes innerhalb des Kommunikationsnetzes Mechanismen vorzusehen, die es Bedarfsträgern (Polizei, Geheimdienste, ...) ermöglichen, den Fernsprechverkehr verdächtiger Personen zu überwachen.

Die Erfindung geht von der Art und Weise aus, wie dieses Problem innerhalb eines klassischen Fernsprechnetzes gelöst ist:

In der lokalen Vermittlungsstelle des zu überwachenden Teilnehmers wird der Teilnehmerdatensatz des zu überwachenden Teilnehmers gekennzeichnet und eine Art Konferenzschaltung zum Bedarfsträger eingerichtet. Die für den jeweiligen Abhörvorgang zusätzlich zu ermittelnden Daten werden von der Vermittlungsstelle mittels Zugriff auf eine Bedarfsträgerdatenbank ermittelt, die Teil der Vermittlungsstelle ist. Der gesamte Abhörmechanismus ist somit Teil der Vermittlungsstelle.

Diese bestehenden Mechanismen stoßen auf prinzipielle Schwierigkeiten, wenn in einem Kommunikationsnetz Dienste für Kommunikationsverbindungen mittels der IN Architektur (IN = Intelligent Network) erbracht werden: Für solche Kommunikationsverbindungen ist in der Regel vorab keine Aussage darüber möglich, über welche Vermittlungsstellen und zu welchem Endgerät (Umwerten von Rufnummern) eine Kommunikationsverbindung geführt wird.

Ein Verfahren zum Abhören von Kommunikationsverbindungen in einem Telekommunikationssystem mit der Intelligenten Netz-Technologie wird in der europäischen Patentanmeldung EP 0792074 A2 beschrieben. Das Abhörverfahren basiert auf einem Eingriff in die Kommunikation zwischen Dienstvermittlungsstellen und Dienststeuereinheiten.

Der Erfindung liegt nun die Aufgabe zugrunde, eine zentrale Initiierung der Überwachung von Kommunikationsverbindungen für solche Kommunikationsverbindungen zu ermöglichen, für die ein IN Dienst erbracht wird.

Diese Aufgabe wird gelöst durch ein Verfahren zum Abhören von Kommunikationsverbindungen zwischen zwei oder mehr Teilnehmern eines Kommunikationsnetzes nach der Lehre von Anspruch 1, einen Abhörverwalter zur Unterstützung des Abhörens von Kommunikationsverbindungen zwischen zwei oder mehr Teilnehmern eines Kommunikationsnetzes nach der Lehre von Anspruch 8, und eine Dienststeuerplattform nach der Lehre von Anspruch 10.

Der Erfindung liegt hierbei der Gedanke zugrunde, daß ein für alle IN Dienste zentraler Dienst in die Kommunikation zwischen den Dienstvermittlungsstellen (SSP = Service Switching Point) und den Dienststeuereinheiten (SCP = Service Control Point) eingebunden wird. Dieser für alle IN Dienste zentraler Dienst ermittelt mittels der Überwachung der Signalisierungs-Kommunikation zwischen den Dienstvermittlungsstellen und den Dienststeuereinheiten zentral für alle von den Dienststeuereinheiten bereitgestellten IN Dienste darüber, ob die Überwachung einer Kommunikationsverbindung initiiert werden soll oder nicht. Es wird somit zwischen Dienstvermittlungsstellen und Dienststeuereinheiten eine Zwischenschicht mit einer für alle Dienststeuereinheiten zentralen Funktion, einem Abhörverwalter, eingeführt, die über die Initiierung der Überwachung von solchen Kommunikationsverbindungen entscheidet, für die ein IN Dienst erbracht wird oder auch mehrere IN Dienste erbracht werden.

Der Vorteil dieses Konzepts besteht zum einen darin, daß eine korrekte Initiierung der Überwachung von Kommunikationsverbindungen ermöglicht wird, für die ein IN Dienst erbracht wird.

Ein weiterer Vorteil besteht darin, daß die Dienstelogik der IN Dienste nicht verändert werden muß und somit die Software der Dienststeuereinheiten für die Einrichtung der Überwachung nicht abgeändert werden muß. Dadurch wird das Einrichten und Abändern einer Überwachungsfunktion wesentlich beschleunigt und erleichtert, insbesondere wenn eine Vielzahl von IN Diensten für das Kommunikationsnetz bereitstehen:

Es ist nur eine zentrale Einrichtung/ Änderung notwendig, um die Überwachung für eine Vielzahl von IN Diensten zu initiieren. Würde dagegen die Überwachungsfunktion in die einem IN Dienst zugeordnete Dienststeuereinheit direkt integriert, so müßte jeweils eine Einrichtung/Änderung der Überwachungsfunktion für jeden IN Dienst unter Beachtung der jeweiligen dienstspezifischen Funktionen einzeln vorgenommen werden. Die Erfindung eignet sich somit insbesondere für Kommunikationssysteme, in denen eine Vielzahl von IN Diensten zur Verfügung stehen.

Ein weiterer Vorteil besteht darin, daß die Dienststeuereinheiten nicht in die Initiierung der Überwachung involviert sind. In den Dienststeuereinheiten liegen keinerlei Informationen vor, die erkennen lassen, daß die Überwachung spezieller Teilnehmer beabsichtigt oder augenblicklich initiiert ist. Eine solche Überwachung ist für die Dienststeuereinheiten auch nicht auf andere Weise erkennbar. Dies hat den Vorteil, daß diese geheimhaltungsbedürftigen Informationen nur an einer zentralen Stelle vorliegen, nämlich in dem Abhörverwalter. Ein solcher zentraler Abhörverwalter ist um ein Vielfaches leichter zu sichern als eine Vielzahl von u. U. räumlich weiter verteilten Dienststeuereinheiten. Die erfindungsgemäße Lösung ist somit auch in Bezug auf Sicherheitsaspekte sehr vorteilhaft. Hierbei ist weiter zu beachten, daß Dienststeuereinheiten und die von Ihnen erbrachten Dienste auch von beliebigen, privaten Dienstbetreibern betrieben werden können, was das Sicherheitsrisiko weiter erhöht.

Vorteilhafte Ausgestaltungen der Erfindung sind den Unteransprüchen zu entnehmen.

Im Folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationssystems mit einem erfindungsgemäßen Abhörverwalter.
- Fig. 2: zeigt eine funktionelle Darstellung des Abhörverwalters nach Fig. 1 und dessen Einbindung in das Kommunikationssystem nach Fig. 1.
- Fig. 3: zeigt ein Ablaufdiagramm, das der Beschreibung des erfindungsgemäßen Verfahrens dient.

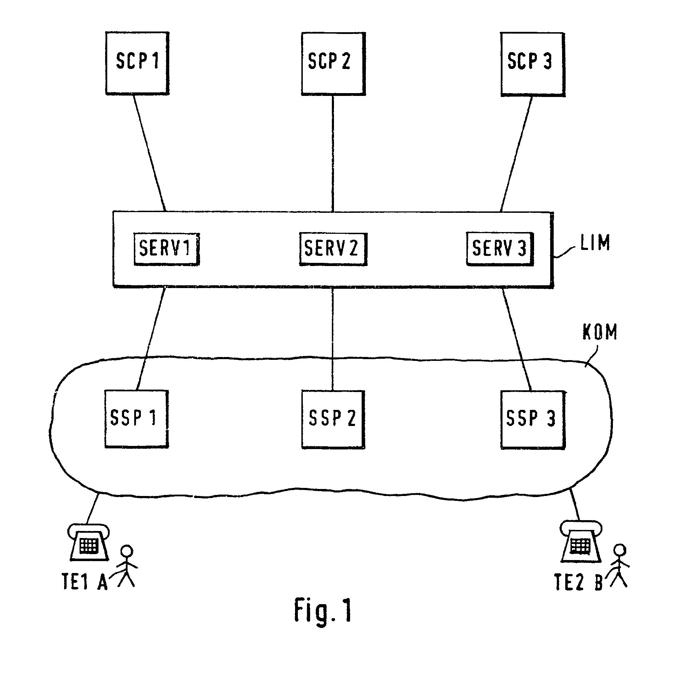

Fig. 1 zeigt ein Kommunikationsnetz KOM, einen Abhörverwalter LIM und drei Dienststeuereinheiten SCP1 bis SCP3.

Bei dem Kommunikationsnetz KOM handelt es sich um ein übliches Fernsprechnetz. Es ist jedoch auch möglich, daß das Kommunikationsnetz KOM auch der Daten- oder Videoübertragung dient. Das Kommunikationsnetz KOM kann auch aus verschiedenen, miteinander verbundenen Teilnetzen bestehen, die beispielsweise unterschiedlichen Netzbetreibern zugeordnet sind. Teilnetze können hierbei auch von Mobilfunknetzen gebildet werden.

Das Kommunikationsnetz KOM wird von einer Vielzahl miteinander verbundener Vermittlungsstellen gebildet, von denen in Fig. 1 beispielhaft drei speziell ausgestaltetet Vermittlungsstellen, drei Dienstvermittlungsstellen SSP1 bis SSP3, gezeigt sind. Bei den Dienstvermittlungsstellen SSP1 bis SSP3 handelt es sich vorzugsweise um Dienstvermittlungsstellen gemäß der IN Architektur. Die Zahl der Dienstvermittlungsstellen SSP1 bis SSP3 ist beispielhaft gewählt, es muß jedoch zumindest eine solche Vermittlungsstelle im Kommunikationsnetz KOM vorhanden sein. Die Dienstvermittlungsstellen SSP1 bis SSP3 sind über das Signalisierungsnetz des Kommunikationsnetzes KOM, beispielsweise über ein Nr. 7 Signalisierungsnetz, mit dem Abhörverwalter LIM verbunden. Es ist auch möglich, daß Anstelle des Signalisierungsnetzes ein breitbandiges Datennetz, beispielsweise ein ATM-, DQDB oder IP Datennetze (ATM = Asynchronous Transfer Mode, DQDB = Distributed Queue Dual Bus, IP = Internet Protocol) für diese Verbindungen verwendet wird.

In der Steuerung der Dienstvermittlungsstellen SSP1 bis SSP3 sind Dienstvermittlungsfunktion implementiert. Die Dienstvermittlungsfunktionen erkennen jeweils bestimmte Trigger-Ereignisse beim Aufbau einer Verbindung, die über die jeweilige Dienstvermittlungsstelle aufgebaut wird. Solche Trigger-Ereignisse können beispielsweise bestimmte gerufene Rufnummer (Verbindungsziel) oder bestimmte Eigenschaften des rufenden und gerufenen Teilnehmers (Verbindungsursprung) sein. Wird ein solches Ereignis beim Aufbau einer Verbindung von einer Dienstvermittlungsfunktion für einen Ruf erkannt, so erzeugt sie eine Dienstanforderungsnachricht. Diese Dienstanforderungsnachricht wird über den Abhörverwalter LIM an eine (oder auch mehrere) der Dienststeuereinheiten SCP1, SCP2 gerichtet, die den Dienst (die Dienste) erbringt, der dem jeweiligen Trigger-Ereignis zugeordnet ist. In dem daran anschließenden Dialog (Dienstinteraktion) zwischen der Dienstvermittlungsfunktion und der Dienststeuereinheit, der ebenfalls über den Abhörverwalter LIM geführt wird, führt die Dienstvermittlungsfunktion dann die an sie gerichteten Befehle aus, die die weitere Bearbeitung der Verbindung betreffen. Solche Befehle bestehen beispielsweise in der Weiterleitung der Verbindung zu einer anderen Rufnummer.

Es ist auch möglich, daß die Dienstvermittlungsstellen SSP1 bis SSP3 eine der Dienststeuereinheit für jede über sie geführte Verbindung triggern. Ein Beispiel hierfür ist eine Dienststeuereinheit, die einen Rufnummernportabilitätsdienst erbringt. Hier ist es möglich, daß diese Dienststeuereinheit für jeden Ruf getriggert wird, wenn dieser Dienst für alle Verbindung erbracht werden muß.

Es ist weiter möglich, daß auch mehrere Dienststeuereinheiten für eine Verbindung getriggert werden. Dies ist der Fall, wenn mehrere verschiedene Dienste für eine Verbindung erbracht werden sollen.

Die Dienststeuereinheiten SCP1 bis SCP3 entsprechen vorzugsweise Dienststeuerpunkten gemäß der IN-Architektur. Eine oder mehrere der Dienststeuereinheiten SCP1 bis SCP3 können auch von einer virtuellen Maschinen gebildet werden, die zusammen mit anderen Funktion auf einer Hardware-Plattform ausgeführt wird. Die Dienststeuereinheiten SCP1 bis SCP3 weisen jeweils eine Dienstlogik auf. Die Dienstlogika stellen jeweils ein Dienststeuerprogramm dar, das die Steuerung der Erbringung eines speziellen Dienstes beschreibt. Wird die Ausführung einer Dienstlogik für eine Verbindung aktiviert, so wird ein Prozeß gestartet, der das jeweilige Dienststeuerprogramm für diese Verbindung durchführt.

Der Abhörverwalter LIM ist über ein Kommunikationsnetz mit den Dienststeuereinheiten SCP1 bis SCP3 verbunden. Bei diesem Kommunikationsnetz handelt es sich vorzugsweise um das Signalisierungsnetz des Kommunikationsnetzes KOM. Es kann sich bei diesem Kommunikationsnetz jedoch auch um ein anderes Datennetz, beispielsweise um ein IP Netz handeln. Verschiedene Dienststeuereinheiten können auch über unterschiedliche Kommunikationsnetze mit dem Abhörverwalter LIM verbunden sein.

Es ist auch möglich, daß ein oder mehrere der Dienststeuereinheiten SCP1 bis SCP3 einem anderen Dienstbetreiber oder Netzbetreiber zugeordnet sind. Solche Dienststeuereinheiten sind dann mit dem Abhörverwalter LIM über ein Gateway verbunden, das die notwendigen Netzübergangsfunktionen zu dem anderen Dienstbetreiber bzw. Netzbetreiber, beispielsweise Screening Funktionen, bereitstellt. Solch Dienststeuereinheiten sind mit dem Abhörverwalter häufig über ein anderes Kommunikationsmedium als die übrigen Dienststeuereinheiten verbunden, beispielsweise über Nr. 7 anstatt über ein LAN (Local Area Network).

Der Abhörverwalter LIM wird von einem oder mehreren über ein Kommunikationsmedium verbundenen Rechnerplattformen gebildet, auf denen Applikationen zur Erfüllung seiner Funktionen aufsetzen. Der Abhörverwalter LIM weist in Fig. 1 beispielhaft drei Rechnerplattformen SERV1 bis SERV3 auf. Es ist auch möglich, daß der Abhörverwalter LIM eine virtuelle Maschinen darstellt, die auf ein oder mehrere miteinander verbundene Server-Rechner aufsetzt, die die Hardware-Plattform für den Abhörverwalter und weiteren, IN bezogenen Funktionen bildet. Solche weiteren Funktionen sind vorteilhafterweise IN-Infrastruktur-Dienste, beispielsweise Rufnummernportabilitätsfunktionen, und INAP-Anpassungsfunktionen. Damit wäre der Abhörverwalter Teil der "Lower Layer IN" Ebene in einem IN Architekturkonzept, das IN Dienste in eine "Lower Layer IN" Ebene und eine "Upper Layer IN" Ebene aufteilt.

Die Kommunikation zwischen den Dienstvermittlungsstellen SSP1 bis SSP3 des Kommunikationsnetzes KOM und den Dienststeuereinheiten SCP1 bis SCP3 wird zentral über den Abhörverwalter LIM geleitet. Der Abhörverwalter LIM erbringt hierbei einen zentralen Dienst für alle Dienststeuereinheiten SCP1 bis SCP3: Der zentraler Abhörverwalter LIM wird für eine Kommunikationsverbindung des Kommunikationsnetze KOM getriggert, wenn eine der Dienststeuereinheiten SCP1 bis SCP3 von einer der Dienstvermittlungsstellen SSP1 bis SSP3 für diese Kommunikationsverbindung getriggert wird. Wenn der zentrale Abhörverwalter LIM für eine Kommunikationsverbindung getriggert ist, so überwacht er die zugeordnete Dienst-Interaktion zwischen der jeweiligen Dienstvermittlungsstelle und den jeweiligen ein oder mehreren Dienststeuereinheiten. Mittels der so erhaltenen Informationen und mittels vordefinierten Filterkriterien ermittelt der Abhörverwalter LIM sodann, ob die zugeordnete Kommunikationsverbindung abzuhören ist oder nicht. Anschließen initiiert der Abhörverwalter LIM das Abhören der jeweiligen Kommunikationsverbindung, wenn er ermittelt hat, daß die Kommunikationsverbindung abzuhören ist.

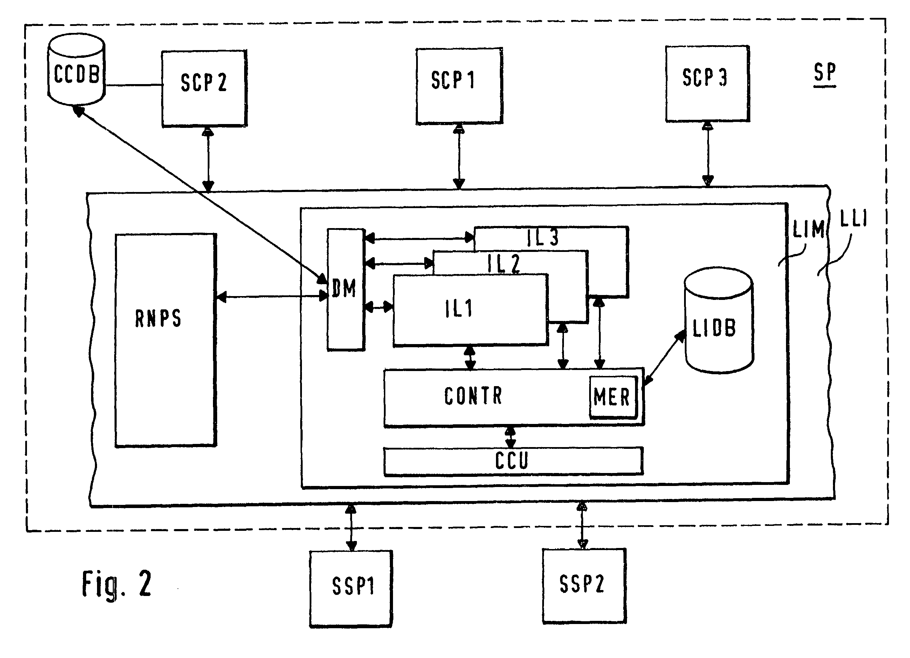

Anhand von Fig. 2 wird nun der detaillierte Aufbau des Abhörverwalter LIM erläutert.

Fig. 2 zeigt die Dienststeuereinheiten SCP1 bis SCP3, die Dienstvermittlungsstellen SSP1 und SSP2, den Abhörverwalter LIM, eine Rufnummernportabilitätsfunktion RNPS und eine Datenbank CCDB.

Die Dienststeuereinheiten SCP1 bis SCP3, der Abhörverwalter LIM und die Rufnummernportabilitätsfunktion RNPS bilden zusammen eine Dienststeuerplattform SP. Die Dienststeuerplattform SP dient der Steuerung von Diensten, die für Kommunikationsverbindungen des Kommunikationsnetzes KOM erbracht werden. Der Abhörverwalter LIM und die Rufnummernportabilitätsfunktion RNPS sind Teil einer Infrastruktur IN Plattform LLI. Die Infrastruktur IN Plattform LLI erbringt die Funktionen der "Lower-Layer IN" Ebene und entkoppelt die Dienstvermittlungsstellen SSP1 bis SSP3 von den Dienststeuereinheiten SCP1 bis SCP3.

Der Abhörverwalter LIM stellt innerhalb der Dienststeuerplattform SP einen für alle Dienststeuereinheit SCP1 bis SCP3 zentralen Abhörverwalter dar. Der Abhörverwalter LIM wird von Applikationsprogrammen gebildet, die auf der Rechnerplattform der Infrastruktur IN Plattform LLI ausgeführten werden. Aus funktioneller Sicht weist der Abhörverwalter LIM zwei Kommunikationseinheit CCU und DM, eine Steuereinheit CONTR, mehreren Abhörlogika IL1 bis IL3 und einer Bedarfsträgerdatenbank CCDB auf.

Die Kommunikationseinheit CCU dient der Kommunikation mit den Dienstvermittlungsstellen SSP1 bis SSP3 des Kommunikationsnetzes KOM und zur Kommunikation mit den Dienststeuereinheiten SCP1 bis SCP3. Die Kommunikationseinheit CCU führt somit Funktionen durch, die den Empfang und eine Interpretation der zwischen den Dienstvermittlungsstellen SSP1 bis SSP3 und den Dienststeuereinheiten SCP1 bis SCP3 ausgetauschten Nachrichten ermöglichen. Diese Funktionen umfassen Funktionen zur Bearbeitung der hierfür verwendeten Transportprotokolle, beispielsweise der Transportprotokolle des Signalisierungssystems Nr. 7. Auf diesen Funktionen setzen Funktionen auf, die das TCAP Protokoll des ITU-T Signalisierungssystem Nr. 7 und das darauf aufsetzende INAP Protokoll (TCAP = Transport Capabilities Application Part, INAP = Intelligent Network Applications Protocol) bearbeiten, mittels dem Dienstvermittlungsfunktionen und Dienststeuerfunktionen gemäß der IN-Architektur interagieren. Die im Rahmen dieses Protokolls ausgetauschten IN-Applikationsnachrichten (INAP Nachrichten) sowie die grundlegend Dienste und Aktionen dieses Protokolls werden anhand eines Beispiels in der Empfehlung ITU-T Q.1219, Kapitel 6.5. Intelligent Network Applications Protokoll, Seite 26 bis 40 und detaillierter in der Empfehlung ITU-T Q.1219 für IN CS-1 erläutert.

Die Kommunikationseinheit DM dient dem Abhörverwalter LIM zur Kommunikation mit Datenbanken, die Dienststeuereinheiten zugeordnet sind oder von diesen zur Erbringung von Diensten kontaktiert werden. Die Kommunikationseinheit DM führt somit Funktionen durch, die den Zugriff auf und die Interaktion mit solchen Datenbanken ermöglicht. Diese Funktionen umfassen Funktionen zur Bearbeitung von Transportprotokollen, bei denen es sich vorzugsweise um für die Kommunikation in LAN Rechnernetzen verwendeten Protokollen, beispielsweise Ethernet-, Fast-Ethernet-, FDDI- oder Token-Protokolle handelt. Auf diesen Funktionen setzen dann beispielsweise Funktionen zur Bearbeitung des IP Protokolls und des TCP oder UDP Protokolls (IP = Internet Protocol, TCP = Transport Control Protocol, UDP = User Datagram Protocol) und weiterer höherer Protokolle auf. Das TCP oder UDP Protokoll kann durch andere Transportprotokolle ersetzt werden, wenn als darunterliegende Transportprotokolle nicht die Protokolle des Nr. 7 Protokollstacks verwendet werden.

Die Steuereinheit CONTR überwacht mittels der Kommunikationseinheit CCU die Kommunikationbeziehungen zwischen den Dienstvermittlungsstellen SSP1 bis SSP3 und den Dienststeuereinheiten SCP1 bis SCP3, die ja über den Abhörverwalter LIM geführt werden. Mittels Auswertung der von den Dienstvermittlungsstellen an Dienststeuereinheiten gesendeten Dienstanforderungsnachrichten erkennt der Abhörverwalter LIM, wenn eine der Dienststeuereinheit SCP1 bis SCP3 von einer Dienstvermittlungsstelle für eine Kommunikationsverbindung getriggert wird. Erkennt sie ein solches Ereignis, so triggert sie den Abhörverwalter LIM für diese Kommunikationsverbindung, indem sie einen Prozess erzeugt, in dem die Abhörlogika IL1 bis IL3 für diese Kommunikationsverbindung instantiiert sind. Eine Kopie der Nachrichten, die zwischen der Dienstvermittlungsstelle und der Dienststeuereinheit für diese Kommunikationsverbindung ausgetauscht werden, werden von der Steuereinheit CONTR an diesen Prozeß weitergeleitet, der die Funktion der Abhörlogika IL1 bis IL3 für diese Kommunikationsverbindung erbringt. Der Prozess sendet eine Nachricht an die Steuereinheit CONTR, wenn er ermittelt, daß diese Verbindung abzuhören ist. Wird die Dienst-Interaktion zwischen Dienstvermittlungsstelle und Dienststeuereinheit für diese Verbindung beendet, so wird von der Steuereinheit der zugeordnete Prozeß beendet. Von der Steuereinheit CONTR wird so ein Anzahl von solchen parallel ablaufenden Prozessen verwaltet, die der Anzahl der parallelen Dienst-Interaktionen zwischen den Dienstvermittlungsstellen SSP1 bis SSP3 und den Dienststeuereinheiten SCP1 bis SCP3 entspricht.

Wenn eine der Abhörlogika IL1 bis IL3 für eine Kommunikationsverbindung ermittelt, daß die Kommunikationsverbindung abzuhören ist, so initiiert die Steuereinheit CONTR das Abhören dieser Kommunikationsverbindung.

Hierzu sendet sie beispielsweise eine Signalisierungsnachricht an die jeweilige zugeordnete Dienstvermittlungsstelle, die dieser anzeigt, die Kommunikationsverbindung abzuhören. Eine weitere Möglichkeit besteht darin, daß sie in einer von der zugeordneten Dienststeuereinheit an die zugeordnete Dienstvermittlungsstelle gesendeten Signalisierungsnachricht einen speziellen Parameter setzt, der dieser anzeigt, die Kommunikationsverbindung abzuhören.

Die Dienstvermittlungsstelle baut daraufhin für die Kommunikationsverbindung eine spezielle Konferenzverbindung (nur Mithören) zu einem Bedarfsträger auf, über den dieser die Verbindung abhören kann.

Es ist vorteilhaft, daß zusätzlich zu der blosen Information, daß die Kommunikationsverbindung abzuhören ist, zusätzlich noch weitere Daten von der Steuereinheit CONTR ermittelt und an die zugeordnete Dienstvermittlungsstelle gesendet werden. Diese Daten werden dann von der Dienstvermittlungsstelle an den jeweiligen Bedarfsträger weitergeleitet.

Mittels zusätzlicher Informationen, die von den Abhörlogika IL1 bis IL3 an die Steuereinheit CONTR geleitet werden, greift der Abhörverwalter (LIM) auf die Bedarfsträgerdatenbank LIDB zu. Solche zusätzlichen Informationen sind beispielsweise der Bedarfsträger, für den abgehört werden soll und der Abhörfall, auf den sich das Abhören bezieht. Mittels Zugriff auf die Bedarfsträgerdatenbank werden die jeweiligen Bedarfsträgerdaten für die abzuhörende Verbindung ermittelt. Bedarfsträgerdaten sind Informationen über die abzuhörende Verbindung wie Zeit, Rufnummer des gerufenen/rufenden Teilnehmers, für die Verbindung erbrachte Dienste, Dauer der Verbindung usw. , sowie Kennzeichnung des Bedarfsträgers und des Abhörfalls, für den das Abhören der Verbindung initiiert wird. Die für den jeweiligen Bedarfsträger/ Abhörfalle zu ermittelnde Satz von Bedarfsträgerdaten wird durch die Bedarfsträgerdatenbank LIDB festgelegt. Die Ermittlung von Bedarfsträgerdaten wird somit von der Steuereinheit CONTR dem jeweiligen Abhörfall entsprechend durchgeführt.

Die Abhörlogika IL1 bis IL3 sind verschiedenen Abhörfällen unterschiedlichen Bedarfsträgern zugeordnet. Jede Abhörlogik entspricht einem anderen Abhörfall. Die Abhörlogika IL1 bis IL3 ermitteln mittels verschiedener Filterkriterien oder mittels verschieden verknüpften Filterkriterien parallel für eine Kommunikationsverbindung, ob die Kommunikationsverbindung abzuhören ist oder nicht.

Die Anzahl der Abhörlogika IL1 bis IL3 ist hier beispielhaft gewählt.

Die Funktionsweise der Abhörlogika IL1 bis IL3 wird im folgenden beispielhaft anhand der Abhörlogik IL1 beschrieben.

Die Abhörlogik IL1 überwacht, wenn der Abhörverwalter LIM für eine Kommunikationsverbindung von der Steuereinheit CONTR getriggert worden ist, die Kommunikation zwischen der jeweiligen zugeordneten Dienstvermittlungsstelle und den jeweiligen ein oder mehreren zugeordneten Dienststeuereinheiten. Mittels der zwischen der für die Kommunikationsverbindung zwischen dieser Dienstvermittlungsstelle und diesen ein oder mehreren Dienststeuereinheiten ausgetauschten Informationen und mittels vordefinierten Filterkriterien ermittelt sie sodann, ob die Kommunikationsverbindung abzuhören ist oder nicht.

Filterkriterien können zum einen alle in einer Kommunikation zwischen Dienstvermittlungsstelle und Dienststeuereinheit ausgetauschte Informationen sein, beispielsweise Rufnummer des Ursprungs- und Zielteilnehmers, umgewertete Rufnummer, Art des Dienstes, der Erbracht wird, spezielle Kommandos, die von der Dienststeuereinheit an die Dienstvermittlungsstelle oder an sonstige Netzelemente (Intelligent Peripherals, Netzelemente eines IP Netzes) gesendet werden (Initiierung spezieller Sprachansagen, Übergabe spezieller Zustandsdaten oder Adressierungsinformationen).

Filterkriterien können weiter allgemein verfügbare Daten wie Datum und Uhrzeit sein.

Filterkriterien können weiter auch auf Daten basieren, die aus Datenbanken stammen, die Dienststeuereinheiten zugeordnet sind. Zur Ermittlung dieser Daten greift die Abhörlogik IL1 mittels der Kommunikationseinheit DM auf die entsprechende Datenbank, beispielsweise die Datenbank CCDB zu und frägt diese Daten ab. Sodann werden die Filterkriterien auf die so ermittelten Daten angewendet. Es wird so ermittelt, ob die mittels der Abfrage ermittelten Daten dem Filterkriterium entsprechen.

Ein Beispiel: Bei der Datenbank handelt es sich um die Datenbank eines Kreditkartendienstes oder Telefonkartendienstes. Der Kreditkartendienst wird für eine Verbindung getriggert. Die Abhörlogik IL1 greift nun auf die diesem Dienst zugeordnete Datenbank zu und ermittelt mittels dieses Zugriffs, welcher Teilnehmer der Kreditkartennummer, die von der Dienstvermittlungsstelle zu der Dienststeuereinheit transportiert wird, zugeordnet ist. Ist dieser Teilnehmer ein von einem Filterkriterium definierter Teilnehmer, so initiiert die Abhörlogik IL1 das Abhören der Verbindung.

Ein weiteres Beispiel: Die Abhörlogik IL1 greift mittels der Kommunikationseinheit DM auf die Rufnummernportabilitätdatenbank eines Rufnummernportabilitätsdienstes zu.

Es ist natürlich möglich, daß diese Filterkriterien beliebig miteinander verknüpft werden können und sich die Entscheidung, ob eine Verbindung abgehört werden soll oder nicht, sich aus dieser Verknüpfung ergibt.

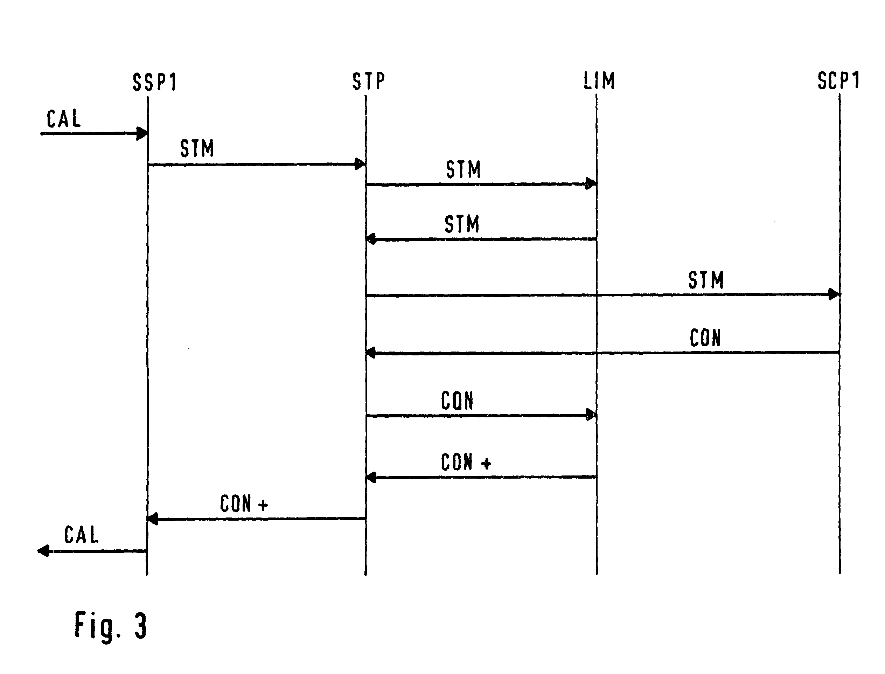

Anhand von Fig. 3 wird nun ein möglicher Ablauf des erfindungsgemäßen Verfahrens anhand eines weiteren Ausführungsbeispiels beispielhaft erläutert.

Fig. 3 zeigt die Dienstvermittlungsstelle SSP1, einen Signalisierungsknoten STP, den Abhörverwalter LIM und die Dienststeuereinheit SCP1. Die Dienstvermittlungsstelle SSP1, der Abhörverwalter LIM und die Dienststeuereinheit SCP1 sind nach Fig. 1 aufgebaut. Bei dem Signalisierungsknoten STP handelt es sich um einen üblichen Signalisierungsknoten eines Nr. 7 Signalisierungsnetzes.

Ein Ruf CAL wird durch das Kommunikationsnetz KOM zu der Dienstvermittlungsstelle SSP1 geleitet. Der Ruf erfüllt ein Triggerkriterium der Dienstvermittlungsstelle SSP1 und eine Verbindungsanforderung STM wird von der Dienstvermittlungsstelle SSP1 durch das Signalisierungsnetz zu der Dienststeuereinheit SCP1 gesendet. Der Signalisierungsknoten STP leitet die Dienstanforderungsnachricht STM auf den Abhörverwalter LIM um. Die Ankunft der Dienstanforderungsnachricht STM triggert den Abhörverwalter für die Verbindung. Der Abhörverwalter STM entnimmt (kopiert) die in der Dienstanforderungsnachricht STM enthaltenen Informationen und sendet die Dienstanforderungsnachricht STM an die Dienststeuereinheit SCP1 weiter. Die Dienststeuereinheit SCP erbringt einen Dienst für die Verbindung und sendet eine entsprechende Steuernachricht CON durch das Signalisierungsnetz an die Dienstvermittlungsstelle SSP1. Der Signalisierungsknoten STP leitet die Steuernachricht CON auf den Abhörverwalter LIM um. Der Abhörverwalter STM entnimmt (kopiert) die in der Steuernachricht CON enthaltenen Informationen. Die in der Dienstanforderungsnachricht STM enthaltenen Informationen und die in der Steuernachricht CON enthaltenen Informationen werden mit den Filterkriterien verglichen und der Abhörverwalter ermittelt daraus, ob die Verbindung abzuhören ist oder nicht. Ist die Verbindung abzuhören, so initiiert der Abhörverwalter das Abhören der Verbindung, indem er die Steuernachricht CON verändert. Er setzt einen speziellen Parameter in der Steuernachricht und fügt die Bedarfsträgerdaten hinzu. Er leite die derart veränderte Steuernachricht sodann als Steuernachricht CON+ an die Dienstvermittlungsstelle SSP1 weiter. Die Dienstvermittlungsstelle baut auf den Empfang der Steuernachricht CON+ eine Konferenzverbindung zum Bedarfsträger auf und übermittelt parallel die Bedarfsträgerdaten an diesen Bedarfsträger. Weiter leitet sie den Ruf CAL entsprechend den Steueranweisungen der Dienststeuereinheit SCP1 weiter.

## Patentansprüche

1. Verfahren zum Abhören von Kommunikationsverbindungen zwischen zwei oder mehr Teilnehmern (A, B) eines Kommunikationsnetzes (KOM), wobei für die Kommunikationsverbindungen jeweils mindestens eine Dienststeuereinheit aus einer Vielzahl von Dienststeuereinheiten (SCP1 bis SCP3) von einer Dienstvermittlungsstelle (SSP1 bis SSP3) des Kommunikationsnetzes getriggert werden kann und die Dienststeuereinheiten (SCP1 bis SCP3), wenn sie für eine Kommunikationsverbindung getriggert werden, jeweils die Erbringung eines Dienstes für die Kommunikationsverbindung steuern, wobei die Kommunikation zwischen der jeweiligen Dienstvermittlungsstelle (SSP1) und der jeweiligen Dienststeuereinheit (SCP1) in Bezug auf die jeweilige Kommunikationsverbindung überwacht wird und mittels der jeweiligen Dienstvermittlungsstelle (SSP1) und der jeweiligen Dienststeuereinheit (SCP1) ausgetauschten Informationen und mittels vordefinierter Filterkriterien ermittelt wird, ob die Kommunikationsverbindung abzuhören ist oder nicht, und das Abhören der jeweiligen Kommunikationsverbindung initiiert wird, wenn die Kommunikationsverbindung abzuhören ist,
**dadurch gekennzeichnet, daß** die Kommunikation zwischen Dienstvermittlungsstellen (SSP1 bis SSP3) des Kommunikationsnetzes und den Dienststeuereinheiten (SCP1 bis SCP3) über einen für alle Dienststeuereinheiten zentralen Abhörverwalter (LIM) geleitet wird, daß der zentraler Abhörverwalter (LIM) für eine Kommunikationsverbindung getriggert wird, wenn eine der Dienststeuereinheiten (SCP1) von einer der Dienstvermittlungsstellen (SSP1) für diese Kommunikationsverbindung getriggert wird, daß der zentrale Abhörverwalter (LIM), wenn er für eine Kommunikationsverbindung getriggert wird, die Kommunikation zwischen der jeweiligen Dienstvermittlungsstelle (SSP1) und der jeweiligen Dienststeuereinheit (SCP1) in Bezug auf die jeweilige Kommunikationsverbindung überwacht und mittels der zwischen der jeweiligen Dienstvermittlungsstelle (SSP1) und der jeweiligen Dienststeuereinheit (SCP1) ausgetauschten Informationen und mittels vordefinierten Filterkriterien ermittelt, ob die Kommunikationsverbindung abzuhören ist oder nicht, und daß der zentrale Abhörverwalter (LIM) das Abhören der jeweiligen Kommunikationsverbindung initiiert, wenn er ermittelt, daß die Kommunikationsverbindung abzuhören ist.

2. Verfahren nach Anspruch 1, **dadurch gekennzeichnet, daß** der Abhörverwalter (LIM) über zwei oder mehr verschiedene Abhörlogika (IL1 bis IL3) verfügt, die mittels verschiedener Filterkriterien parallel für eine Kommunikationsverbindung ermitteln, ob die Kommunikationsverbindung abzuhören ist oder nicht.

3. Verfahren nach Anspruch 2, **dadurch gekennzeichnet, daß** die zwei oder mehr verschiedenen Abhörlogika (IL1 bis IL3) unterschiedlichen Bedarfsträgern zugeordnet sind.

4. Verfahren nach Anspruch 1, **dadurch gekennzeichnet, daß** der Abhörverwalter (LIM) zusätzlich auf eine Datenbanken (CCDB) zugreift, die einer Dienststeuereinheiten (SCP2) zugeordnet ist, um für die Kommunikationsverbindung zu ermitteln, ob die Kommunikationsverbindung abzuhören ist oder nicht .

5. Verfahren nach Anspruch 1, **dadurch gekennzeichnet, daß** der Abhörverwalter (LIM) auf eine Bedarfsträgerdatenbank (LIDB) zugreift und die jeweiligen Bedarfsträgerdaten für die Kommunikationsverbindung ermittelt, wenn er ermittelt, daß die Kommunikationsverbindung abzuhören ist.

6. Verfahren nach Anspruch 1, **dadurch gekennzeichnet, daß** der Abhörverwalter (LIM) das Abhören der jeweiligen Kommunikationsverbindung initiiert, in dem er einen speziellen Parameter in einer von der jeweiligen Dienststeuereinheit an die jeweilige Dienstvermittlungsstelle gesendete Signalisierungsnachricht (CON) setzt, der dieser anzeigt, die Kommunikationsverbindung abzuhören.

7. Verfahren nach Anspruch 1, **dadurch gekennzeichnet, daß** der Abhörverwalter das Abhören der jeweiligen Kommunikationsverbindung initiiert, in dem er eine Signalisierungsnachricht an die jeweilige Dienstvermittlungsstelle sendet, die dieser anzeigt, die Kommunikationsverbindung abzuhören.

8. Abhörverwalter (LIM) zur Unterstützung des Abhörens von Kommunikationsverbindungen zwischen zwei oder mehr Teilnehmern (A, B) eines Kommunikationsnetzes (KOM), wobei der Abhörverwalter (LIM) mit einer Kommunikationseinheit (CCU) zur Kommunikation mit einer Dienstvermittlungsstelle des Kommunikationsnetzes und zur Kommunikation mit einer Dienststeuereinheit versehen ist, die die Erbringung eines Dienstes für eine Kommunikationsverbindung steuern, wenn sie von Dienstvermittlungsstelle für eine der Kommunikationsverbindungen getriggert werden, und der Abhörverwalter (LIM) mit einer Steuereinheit (CONTR) versehen ist, die so ausgestaltet ist, daß sie den Abhörverwalter (LIM) eine Kommunikationsverbindung triggert, wenn die Dienststeuereinheit (SCP1) von der Dienstvermittlungsstelle (SSP1) für diese Kommunikationsverbindung getriggert wird, daß der Abhörverwalter (LIM) mit mindestens einer Abhörlogik (IL1 bis IL3) versehen ist, die so ausgestaltet ist, daß sie, wenn der Abhörverwalter (LIM) für eine Kommunikationsverbindung getriggert wird, die Kommunikation zwischen der Dienstvermittlungsstelle (SSP1) und der Dienststeuereinheit (SCP1) in Bezug auf die jeweilige Kommunikationsverbindung überwacht und mittels der zwischen der Dienstvermittlungsstelle (SSP1) und der Dienststeuereinheite (SCP1) ausgetauschten Informationen und mittels vordefinierten Filterkriterien ermittelt, ob die Kommunikationsverbindung abzuhören ist oder nicht, und daß die Steuereinheit (CONTR) weiter so ausgestaltet ist, daß sie das Abhören der jeweiligen Kommunikationsverbindung initiiert, wenn die mindestens eine Abhörlogik (IL1 bis IL3) ermittelt, daß die Kommunikationsverbindung abzuhören ist, **dadurch gekennzeichnet, dass** die Kommunikationseinheit (CCU) zur Kommunikation mit einer Vielzahl von Dienstvermittlungsstellen (SSP1 bis SSP3) des Kommunikationsnetzes und zur Kommunikation mit einer Vielzahl von Dienststeuereinheiten (SCP1 bis SCP3) versehen ist, die jeweils die Erbringung eines Dienstes für eine Kommunikationsverbindung steuern, und dass die Steuereinheit (CONTR) so ausgestaltet ist, dass sie den zentralen Abhörverwalter für eine Kommunikationsverbindung triggert, wenn eine der Dienststeuereinheiten von einer der Dienstvermittlungsstellen für diese Kommunikationsverbindung getriggert wird, und dass die Abhörlogik so ausgestaltet ist, dass wenn der Abhörverwalter für eine Kommunikationsverbindung getriggert wird, die Kommunikation zwischen der jeweiligen Dienstvermittlungsstelle und der jeweiligen Dienststeuereinheit in Bezug auf die jeweilige Kommunikationsverbindung überwacht und ermittelt, ob die Kommunikation abzuhören ist oder nicht.

9. Abhörverwalter nach Anspruch 8, **dadurch gekennzeichnet, daß** er Teil einer Infrastruktur IN Plattform ist.

10. Dienststeuerplattform (SP) zur Steuerung von Diensten für Kommunikationsverbindungen eines Kommunikationsnetzes (KOM), wobei die Dienststeuerplattform (SP) mit einer Vielzahl von Dienststeuereinheiten (SCP1 bis SCP3) versehen ist, die jeweils die Erbringung eines Dienstes für eine Kommunikationsverbindung steuern, wenn sie von einer Dienstvermittlungsstelle (SSP1 bis SSP3) des Kommunikationsnetzes (KOM) für die Kommunikationsverbindung getriggert werden,
**dadurch gekennzeichnet, daß** die Dienststeuerplattform (SP) weiter mit einem für alle Dienststeuereinheit (SCP1 bis SCP3) zentralen Abhörverwalter (LIM) versehen ist, der mit den ein oder mehreren Dienststeuereinheiten (SCP1 bis SCP3) verbunden ist, daß der Abhörverwalter (LIM) mit einer Kommunikationseinheit (CCU) zur Kommunikation mit Dienstvermittlungsstellen (SSP1 bis SSP3) des Kommunikationsnetzes und zur Kommunikation mit den Dienststeuereinheiten (SCP1 bis SCP3) versehen ist, daß der Abhörverwalter (LIM) mit einer Steuereinheit (CONTR) versehen ist, die so ausgestaltet ist, daß sie den Abhörverwalter (LIM) zentral für eine Kommunikationsverbindung triggert, wenn eine der Dienststeuereinheiten Kommunikationsverbindung triggert, wenn eine der Dienststeuereinheiten (SCP1) von einer der Dienstvermittlungsstellen (SSP1) für diese Kommunikationsverbindung getriggert wird, daß der Abhörverwalter (LIM) mit mindestens einer Abhörlogik (IL1 bis IL3) versehen ist, die so ausgestaltet ist, daß sie, wenn der Abhörverwalter (LIM) für eine Kommunikationsverbindung getriggert wird, die Kommunikation zwischen der jeweiligen Dienstvermittlungsstelle (SSP1) und der jeweiligen Dienststeuereinheit (SCP1) in Bezug auf die jeweilige Kommunikationsverbindung überwacht und mittels der zwischen der Dienstvermittlungsstelle (SSP1) und der jeweiligen Dienststeuereinheit (SCP1) ausgetauschten Informationen und mittels vordefinierten Filterkriterien ermittelt, ob die Kommunikationsverbindung abzuhören ist oder nicht, und daß die Steuereinheit (CONTR) weiter so ausgestaltet ist, daß sie das Abhören der jeweiligen Kommunikationsverbindung initiiert, wenn die mindestens eine Abhörlogik (IL1 bis IL3) ermittelt, daß die Kommunikationsverbindung abzuhören ist.

## Claims

1. Method for intercepting communication connections between two or more subscribers (A, B) of a communications network (KOM) wherein for each of the communication connections, at least one service control point of a plurality of service control points (SCP1 to SCP3) can be triggered by a service switching point (SSP1 to SSP3) of the communications network, and the service control points (SCP1 to SCP3), when triggered for a communication connection, respectively control the provision of a service for the communication connection, the communication between the respective service switching point (SSP1) and the respective service control point (SCP1) is monitored in respect of the respective communication connection, and it is determined, on the basis of the information exchanged between the respective service switching point (SSP1) and the respective service control point (SCP1), and on the basis of predefined filter criteria, whether the communication connection is to be intercepted or not, and the interception of the respective communication connection is initiated if the communication connection is to be intercepted, **characterized in that** the communication between service switching points (SSP1 to SSP3) of the communications network and the service control points (SCP1 to SCP 3) is routed via an interception manager (LIM) that is central to all service control points, the central interception manager (LIM) is triggered for a communication connection when one (SCP1) of the service control points is triggered for this communication connection by one (SSP1) of the service switching points, the central interception manager (LIM), when triggered for a communication connection, monitors the communication between the respective service switching point (SSP1) and the respective service control point (SCP1) in respect of the respective communication connection and, on the basis of the information exchanged between the respective service switching point (SSP1) and the respective service control point (SCP1), and on the basis of predefined filter criteria, determines whether the communication connection is to be intercepted or not, and the central interception manager (LIM) initiates the interception of the respective communication connection if it determines that the communication connection is to be intercepted.

2. Method according to claim 1, **characterized in that** the interception manager (LIM) comprises two or more different interception logics (IL1 to IL3) which determine in parallel for a communication connection, based on different filter criteria, whether the communication connection is to be intercepted or not.

3. Method according to claim 2, **characterized in that** the two or more different interception logics (IL1 to IL3) are associated with different users.

4. Method according to claim 1, **characterized in that** the interception manager (LIM) additionally accesses a database (CCDB) associated with a service control point (SCP2), in order to determine for the communication connection whether the communication connection is to be intercepted or not.

5. Method according to claim 1, **characterized in that** the interception manager (LIM) accesses a user database (LIDB), and determines the respective user data for the communication connection when it determines that the communication connection is to be intercepted.

6. Method according to claim 1, **characterized in that** the interception manager (LIM) initiates the interception of the respective communication connection by setting, in a signalling message (CON) sent by the respective service control point to the respective service switching point, a specific parameter which indicates to this service switching point that the communication connection is to be intercepted.

7. Method according to claim 1, **characterized in that** the interception manager initiates the interception of the respective communication connection by sending to the respective service switching point a signalling message which indicates to this service switching point that the communication connection is to be intercepted.

8. Interception manager (LIM) for supporting the interception of communication connections between two or more subscribers (A, B) of a communications network (KOM), wherein the interception manager (LIM) comprises a communications unit (CCU) for communication with a service switching point of the communications network and for communication with a service control point which control the provision of a service for a communication connection when triggered for one of the communication connections by a service switching point, and the interception manager (LIM) comprises a control unit (CONTR) designed to trigger the interception manager (LIM) for a communication connection when the service control point (SCP1) is triggered for this communication connection by the service switching point (SSP1), the interception manager (LIM) comprises at least one interception logic (IL1 to IL3) designed to monitor the communication between the service switching point (SSP1) and the service control point (SCP1) in respect of the respective communication connection when the interception manager (LIM) is triggered for said communication connection, and to determine, on the basis of the information exchanged between the service switching point (SSP1) and the service control point (SCP1) and on the basis of predefined filter criteria, whether the communication connection is to be intercepted or not, and the control unit (CONTR) is further designed to initiate the interception of the respective communication connection when the at least one interception logic (IL1 to IL3) determines that the communication connection is to be intercepted, **characterized in that** the communication unit (CCU) is provided for communication with a plurality of service switching points (SSP1 to SSP3) of the communications network and for communication with a plurality of service control points (SCP1 to SCP3), which said service control points respectively control the provision of a service for a communication connection, and the control unit (CONTR) is designed to trigger the central interception manager for a communication connection when one of the service control points is triggered by one of the service switching points for this communication connection, and the interception logic is designed to monitor the communication between the respective service switching point and the respective service control point in respect of the respective communication connection when the interception manager is triggered for a communication connection, and to determine whether the communication is to be intercepted or not.

9. Interception manager according to claim 8, **characterized in that** it forms part of an infrastructure IN platform.

10. Service control platform (SP) for controlling services for communication connections of a communications network (KOM), wherein the service control platform (SP) comprises a plurality of service control points (SCP1 to SCP3) which respectively control the provision of a service for a communication connection when triggered for the communication connection by a service switching point (SSP1 to SSP3) of the communications network (KOM), **characterized in that** the service control platform (SP) further comprises an interception manager (LIM) that is central to all service control points (SCP1 to SCP3) and is connected to the one or more service control points (SCP1 to SCP3), the interception manager (LIM) comprises a communications unit (CCU) for communication with service switching points (SSP1 to SSP3) of the communications network and for communication with the service control points (SCP1 to SCP3), the interception manager (LIM) comprises a control unit (CONTR) designed to centrally trigger the interception manager (LIM) for a communication connection when one (SCP1) of the service control points is triggered for this communication connection by one (SSP1) of the service switching points, the interception manager (LIM) comprises at least one interception logic (IL1 to IL3) designed to monitor the communication between the respective service switching point (SSP1) and the respective service control point (SCP1) in respect of the communication connection when the interception manager (LIM) is triggered for a communication connection, and to determine, on the basis of the information exchanged between the service switching point (SSP1) and the respective service control point (SCP1) and on the basis of predefined filter criteria, whether the communication connection is to be intercepted or not, and the control unit (CONTR) is further designed to initiate the interception of the respective communication connection when the at least one interception logic (IL1 to IL3) determines that the communication connection is to be intercepted.

## Revendications

1. Procédé pour écouter des liaisons de communication entre deux abonnés ou plus (A, B) d'un réseau de communication (KOM), au moins une unité de commande de services parmi une pluralité d'unités de commande de services (SCP1 à SCP3) d'un central de commutation de services (SSP1 à SSP3) pouvant à chaque fois être déclenchée pour les liaisons de communication et les unités de commande de services (SCP1 à SCP3), lorsqu'elles sont déclenchées pour une liaison de communication, commandant à chaque fois la fourniture d'un service pour la liaison de communication, la communication entre le central de commutation de services correspondant (SSP1) et l'unité de commande de services correspondante (SCP1) étant surveillée en rapport avec la liaison de communication correspondante et la nécessité ou non d'écouter la liaison de communication étant déterminée au moyen des informations échangées entre le central de commutation de services correspondant (SSP1) et l'unité de commande de services correspondante (SCP1) ainsi qu'au moyen de critères de filtrage prédéfinis et l'écoute de la liaison de communication étant initié lorsque l'écoute de la liaison de communication est requise, **caractérisé en ce que** la communication entre les centraux de commutation de services (SSP1 à SSP3) du réseau de communication et les unités de commande de services (SCP1 à SCP3) est dirigée par un gestionnaire d'écoute central (LIM) commun à toutes les unités de commande de services, que le gestionnaire d'écoute central (LIM) est déclenché pour une liaison de communication lorsque l'une des unités de commande de services (SCP1) est déclenchée par l'un des centraux de commutation de services (SSP1) pour cette liaison de commutation, que le gestionnaire d'écoute central (LIM), lorsqu'il est déclenché pour une liaison de communication, surveille la communication entre le central de commutation de services correspondant (SSP1) et l'unité de commande de services correspondante (SCP1) en rapport avec la liaison de communication correspondante et détermine la nécessité ou non d'écouter la liaison de communication au moyen des informations échangées entre le central de commutation de services correspondant (SSP1) et l'unité de commande de services correspondante (SCP1) ainsi qu'au moyen de critères de filtrage prédéfinis, et que le gestionnaire d'écoute central (LIM) initie l'écoute de la liaison de communication correspondante lorsqu'il détermine que l'écoute de la liaison de communication est requise.

2. Procédé selon la revendication 1, **caractérisé en ce que** le gestionnaire d'écoute (LIM) dispose de deux logiques d'écoute différentes ou plus (IL1 à IL3) qui, au moyen de différents critères de filtrage, déterminent en parallèle pour une liaison de communication si la liaison de communication doit être écoutée ou non.

3. Procédé selon la revendication 2, **caractérisé en ce que** des ayant-droits différents sont associés aux deux logiques d'écoute ou plus (IL1 à IL3).

4. Procédé selon la revendication 1, **caractérisé en ce que** le gestionnaire d'écoute (LIM) accède en plus à une base de données (CCDB) qui est associée à une unité de commande de services (SCP2) afin de déterminer pour la liaison de communication si la liaison de communication doit être écoutée ou non.

5. Procédé selon la revendication 1, **caractérisé en ce que** le gestionnaire d'écoute (LIM) accède à une base de données des ayant-droits (LIDB) et détermine les données d'ayant-droit correspondantes lorsqu'il détermine que la liaison de communication doit être écoutée.

6. Procédé selon la revendication 1, **caractérisé en ce que** le gestionnaire d'écoute (LIM) initie l'écoute de la liaison de communication correspondante en définissant un paramètre spécial dans un message de signalisation (CON) envoyé de l'unité de commande de services correspondante vers le central de commutation de services correspondant, lequel indique à celui-ci qu'il faut écouter la communication.

7. Procédé selon la revendication 1, **caractérisé en ce que** le gestionnaire d'écoute initie l'écoute de la liaison de communication correspondante en envoyant un message de signalisation au central de commutation de services correspondant, lequel indique à celui-ci qu'il faut écouter la communication.

8. Gestionnaire d'écoute (LIM) destiné à assister l'écoute de liaisons de communication entre deux abonnés ou plus (A, B) d'un réseau de communication (KOM), le gestionnaire d'écoute (LIM) étant muni d'une unité de communication (CCU) pour communiquer avec un central de commutation de services du réseau de communication et pour communiquer avec une unité de commande de services, lesquels commandent la fourniture d'un service pour une liaison de communication lorsqu'ils sont déclenchés par un central de commutation de services pour l'une des liaisons de communication, et le gestionnaire d'écoute (LIM) étant muni d'une unité de commande (CONTR) qui est configurée de telle sorte qu'elle déclenche le gestionnaire d'écoute (LIM) d'une liaison de communication lorsque l'unité de commande de services (SCP1) est déclenchée par le central de commutation de services (SSP1) pour cette liaison de communication, que le gestionnaire d'écoute (LIM) est muni d'au moins une logique d'écoute (IL1 à IL3) qui est configurée de telle sorte que, lorsque le gestionnaire d'écoute (LIM) est déclenché pour une liaison de communication, elle écoute la communication entre le central de commutation de services (SSP1) et l'unité de commande de services (SCP1) en rapport avec la liaison de communication correspondante et détermine, au moyen des informations échangées entre le central de commutation de services (SSP1) et l'unité de commande de services (SCP1) et au moyen de critères de filtrage prédéfinis, s'il faut écouter la liaison de communication ou non, et que l'unité de commande (CONTR) est en outre configurée de telle sorte qu'elle initié l'écoute de la liaison de communication correspondante lorsque l'au moins une logique d'écoute (IL1 à IL3) détermine que l'écoute de la liaison de communication est requise, **caractérisé en ce que** l'unité de communication (CCU) est munie d'une pluralité de centraux de commutation de services (SSP1 à SSP3) du réseau de communication en vue de la communication et d'une pluralité d'unités de commande de services (SCP1 à SCP3) en vue de la communication, lesquelles commandent à chaque fois la fourniture d'un service pour une liaison de communication, et que l'unité de commande (CONTR) est configurée de telle sorte qu'elle déclenche le gestionnaire d'écoute central pour une liaison de communication lorsque l'une des unités de commande de services est déclenchée par l'un des centraux de commutation de services pour cette liaison de communication, et que la logique d'écoute est configurée de telle sorte que lorsque le gestionnaire d'écoute est déclenché pour une liaison de communication, il surveille la communication entre le central de commutation de services correspondant et l'unité de commande de services correspondante en rapport avec la liaison de communication correspondante et détermine si la communication doit être surveillée ou non.

9. Gestionnaire d'écoute selon la revendication 1, **caractérisé en ce qu'**il fait partie d'une plate-forme à infrastructure de réseau intelligent.

10. Plate-forme de commande de services (SP) pour commander des services pour les liaisons de communication d'un réseau de communication (KOM), la plate-forme de commande de services (SP) étant munie d'une pluralité d'unités de commande de services (SCP1 à SCP3) qui commandent à chaque fois la fourniture d'un service pour une liaison de communication lorsqu'elles sont déclenchées par un central de commutation de services (SSP1 à SSP3) du réseau de communication (KOM),
**caractérisée en ce que** la plate-forme de commande de services (SP) est en plus munie d'un gestionnaire d'écoute central (LIM) commun à toutes les unités de commande de services (SCP1 à SCP3), lequel est relié avec une ou plusieurs unités de commande de services (SCP1 à SCP3), que le gestionnaire d'écoute central (LIM) est muni d'une unité de communication (CCU) pour la communication avec les centraux de commutation de services (SSP1 à SSP3) du réseau de communication et pour la communication avec les unités de commande de services (SCP1 à SCP3), que le gestionnaire d'écoute (LIM) est muni d'une unité de commande (CONTR) qui est configurée de telle sorte qu'elle commande le gestionnaire d'écoute (LIM) de manière centralisée pour une liaison de communication lorsque l'une des unités de commande de services (SCP1) est déclenchée par l'un des centraux de commutation de services (SSP1) pour cette liaison de communication, que le gestionnaire d'écoute (LIM) est muni d'au moins une logique d'écoute (IL1 à IL3) qui est configurée de telle sorte que lorsque le gestionnaire d'écoute (LIM) est déclenché pour une liaison de communication, elle surveille la communication entre le central de commutation de services correspondant (SSP1) et l'unité de commande de services correspondante (SCP1) en rapport avec la liaison de communication correspondante et détermine la nécessité ou non d'écouter la liaison de communication au moyen des informations échangées entre le central de commutation de services (SSP1) et l'unité de commande de services correspondante (SCP1) ainsi qu'au moyen de critères de filtrage prédéfinis, et que l'unité de commande (CONTR) est en plus configurée de telle sorte qu'elle initie l'écoute de la liaison de communication correspondante lorsque l'au moins une logique d'écoute (IL1 à IL3) détermine que l'écoute de la liaison de communication est requise.
